# EUROPEAN PATENT SPECIFICATION

(11) **EP 3 177 468 B1**
(45) Date of publication and mention of the grant of the patent: **13.03.2019**
(21) Application number: 15747245.7
(22) Date of filing: 23.07.2015
(51) Int. Cl.: B60G 11/12, B60G 11/46, B62D 61/12

(54) **MOUNTING OF AN AXLE LIFT**
MONTAGE EINES ACHSLIFTSAGGREGATS
MONTAGE D'UN DISPOSITIF DE LEVAGE D'ESSIEU

(30) Priority: 08.08.2014 NL 2013315
(43) Date of publication of application: 14.06.2017
(73) Proprietor: VDL Weweler B.V., 7325 WC Apeldoorn (NL)
(72) Inventor: BRAMER, Hans, NL-6961 WR Eerbeek (NL)
(74) Representative: EP&C
(86) International application number: PCT/NL2015/050540
(87) International publication number: WO 2016/022024

(56) References cited:
- EP-A1- 0 836 984
- EP-A1- 0 941 915
- EP-A1- 1 332 954
- EP-A1- 1 661 739
- EP-A2- 1 902 933
- ES-A1- 2 372 949
- ES-A1- 2 396 778
- ES-U- 1 029 832

## Description

The present invention relates to mounting an axle lift to a vehicle suspension.

Many utility vehicles such as lorries, trailers or semi-trailers have multiple axle units to bear the load the vehicle has to carry. It is well known to lift an axle unit if not the full bearing capacity is necessary, for example when a (semi-) trailer is empty or only partly loaded. By lifting the axle unit the wheels of the axle unit concerned are lifted from the road surface which results in less travelling resistance and tire wear for the vehicle. Also, wear of other components such as axle, brakes, wheel mount, etc. is thus reduced.

Air sprung wheel axle suspensions in general include a carrying bracket mounted to a vehicle chassis, a trailing arm attached to an axle body of the wheel axle, a pivot bolt and corresponding nut as well as an air spring. The trailing arm is at its front end pivotably mounted to the carrying bracket by means of the pivot bolt and a corresponding tensioning nut. In many wheel axle suspension designs the air spring is mounted between a rear portion of the trailing arm and the chassis. However, also other structures are known where the air spring is mounted to the axle body with an additional mounting piece. In any case the air spring is operative between the axle body to compensate for movements of the wheels perpendicular to the road surface.

To be able to lift an axle unit it is known to mount an axle lift to an air sprung wheel axle suspension. A certain type of axle lifts has a support that is mounted to the carrying bracket of the wheel axle suspension. The support is located mostly under the carrying bracket. An actuator, mostly a pneumatic actuator such as a pneumatic bellows is mounted with an underside to the support. An upper side of the actuator is facing the trailing arm to engage it and lift it if desired. Often a positioning bracket is attached to the upper end of the actuator. The purpose of the positioning bracket is to keep the upper end of the actuator at a certain predefined path. Thereby it is prevented that loads in longitudinal and transverse direction of the trailing arm are born by the actuator, which is not designed for that.

Often it is desirable that the axle lift can be fitted to an already built up wheel axle unit of an existing vehicle as an optional feature. With "already built up axle unit" is meant that the trailing arms, axle body and the air spring are already assembled and fitted to the vehicle chassis.

There are several known options to attach the axle lift support to the carrying bracket of the suspension. One option is to weld the support to the carrying bracket. Another option is to attach the support to the carrying bracket with a particular bolt connection. Another option is to suspend the support from the pivot bolt of the trailing arm.

The latter option is known in embodiments wherein the pivot bolt has to be removed and replaced, or replaced by another pivot bolt. An example where the pivot bolt has to be removed to be able to fit the axle lift support to the carrying bracket is known from ES 1029832.

Removing the pivot bolt is however highly undesirable, because the pivot bolt is a critical component of the suspension and has to be tightened with a specific prescribed tightening moment. Often the manufacturer of the axle unit gives a warranty for the axle unit only if the pivot bolt is not removed by the user.

There are also known embodiments wherein the pivot bolt does not have to be removed, and where the support has multiple parts wherein the arms with attachment apertures which are positioned on lateral sides of the carrying bracket and hooked over the pivot bolt head and the corresponding nut. After that the parts of the support are interconnected such that the hook connection with the pivot bolt is not lost. Examples of such embodiments are disclosed in EP 941 915. A similar embodiment where the pivot bolt does not have to be removed is shown in EP 1 332 954. In this embodiment bushings are arranged over the ends of the pivot bolt. The support comprises initially independent parts having a hole at an upper end to suspend the parts from the bushings. After that the parts of the support are fixed together by means of a lift bellows such that the hook connection with the pivot bolt is not lost.

The positioning bracket of the axle lift in general has a pivoting arm that is pivotably mounted to the carrying bracket and attached to the upper end of the actuator. Although it is not found in all prior known axle lift designs, it is advantageous to have the pivoting arm of the positioning bracket rotate around the same pivoting axis as the trailing arm. Thereto the positioning bracket is mounted to the carrying bracket at the location of the pivot bolt of the trailing arm such that the pivoting axes of the upper end of the actuator and the trailing arm coincide. In EP 836 984 is disclosed an axle lift wherein the positioning bracket has two interconnectable halves such that the arms can be arranged with their apertures over the pivot bolt head and nut and then interconnected. The pivot bolt thus does not have to be removed to be able to mount the positioning bracket.

The present invention has for an object to provide an alternative structure and method to mount an axle lift to a vehicle suspension.

This object is achieved by an axle lift to be mounted to a wheel axle suspension of a vehicle;
the wheel axle suspension including a carrying bracket mounted to a vehicle chassis, a trailing arm attached to an axle body of the wheel axle, a pivot bolt and corresponding nut as well as an air spring,
wherein the trailing arm is pivotably mounted to the carrying bracket by means of the pivot bolt and the corresponding tensioning nut, and the air spring is operative between the chassis and the axle body; and
said pivot bolt having a head and a shank, wherein the head at a side facing away from the shank, is provided with a female fastening means or a male fastening means;
the axle lift comprising an actuator adapted to lift the wheel axle, a support to be mounted to the carrying bracket and supporting one end of the actuator, and a positioning bracket mounted to an opposite end of the actuator, facing the trailing arm,
wherein one of the support and the positioning bracket, or both the support and the positioning bracket include two arms, each provided with an attachment aperture and adapted to be arranged at the pivot bolt,
wherein the axle lift furthermore comprises an extension piece adapted to be mounted to the head of the pivot bolt and adapted to be introduced through the attachment aperture of one of said arms,
and a head-sided tightening means adapted to cooperate with said female or male fastening means of the pivot bolt head for tightening the extension piece to the head.

The axle lift according to the invention is designed to cooperate with a wheel axle suspension having a specific pivot bolt which allows to mount the axle lift without removing the bolt. Furthermore the axle lift design, and in particular the extension piece allows the support and/or the positioning bracket to be mounted to the pivot bolt without them having to be a multipart piece that has to be assembled after it is attached to the pivot bolt. The extension piece is simply introduced through the aperture in the arm of the support and/or the positioning bracket after which the extension piece is tightened against the pivot bolt head. Thus the vehicle manufacturer can if desired retrofit in a simple manner the axle lift without having to remove the pivot bolt from the built up axle unit and without having to assemble parts of the lift.

In a practical embodiment the actuator is a pneumatic actuator, preferably a pneumatic bellows.

In an advantageous embodiment the axle lift is provided in assembled form with the support, the actuator and the positioning bracket assembled together such that the assembled axle lift can be mounted integrally to the existing wheel axle suspension.
In a possible embodiment the axle lift furthermore comprises a nut-sided bushing which is to be arranged over the shank end of the pivot bolt against the tensioning nut, and adapted to fit through the attachment aperture of the other one of said arms. The nut-sided bushing provides a suspension means for the arm of the support and/or the positioning bracket.

In a further embodiment the nut-sided bushing has a female thread which is adapted to screw it on the shank of the pivot bolt. With this female thread in this bushing the threaded end portion of the pivot bolt can advantageously be used to attach the bushing to the pivot bolt.

In alternative further embodiment the axle lift furthermore comprises a nut-sided tightening means cooperating with a male fastening means or female fastening means provided at a pivot bolt end opposite the head, for attaching the nut-sided bushing.

In one possible embodiment the female fastening means is a threaded bore formed in the shank of the pivot bolt, and said nut-sided tightening means comprises a screw bolt having a shank extending in use through the nut-sided bushing and screwed in the threaded bore.

In another possible embodiment the male fastening means is an additional shank which is attached to the pivot bolt shank and which in use extends through the bushing, and wherein said nut-sided tightening means element comprises a nut to be screwed onto the additional shank.

In a preferred embodiment the nut-sided bushing is provided with a radial collar. The radial collar when fitted is located on a side of the arm of the support and/or positioning bracket facing away from the carrying bracket. The collar is shaped and dimensioned such that it does not fit through the aperture in the arm. Hence it provides a locking feature that retains the arm on the bushing.

In a further embodiment the collar has a hexagonal outer contour. This embodiment is particularly advantageous when the bushing has female thread to be screwed on the shank of the pivot bolt.

In a possible embodiment of the axle lift the extension piece comprises a head-sided bushing having a bore, which head-sided bushing is clamped against the head of the pivot bolt by means of the head-sided tightening means. The head-sided bushing provides a suspension means for the arm of the support and/or the positioning bracket.
It is advantageous to have a head-sided bushing and a nut-sided bushing arranged on the pivot bolt which have the same outer diameter. Hereby the arms of the support and/or the positioning bracket can have the same apertures and the axle lift can be fitted on the right hand side and left hand side of the vehicle without difficulty. Furthermore it is then indifferent on which side of the carrying bracket the head of the pivot bolt is located and on which side the tensioning nut.

In an advantageous embodiment the bore of the head-sided bushing has at least a receiving bore portion which is complementary to the head of the pivot bolt so as to receive at least a portion of the head of the pivot bolt. This receiving bore portion has the effect that the load from the axle lift is transferred to the pivot bolt head such that the load is not only born by the head-sided tightening means.

In a particularly advantageous embodiment the receiving bore portion has a conical shape. The conical shape ensures that when the bushing is tightened against the head of the pivot bolt, play in the connection is absent and for example rattling is avoided. Furthermore forces are transferred well from the axle lift to the pivot bolt head having a conical shape. It is noted that by conical in this regard is meant that the diameter of the bore portion decreases. This can either be in a linear way, but also following a curved function. The latter would for example be the case when the pivot bolt head has a sort of mushroom shaped head.

In another embodiment the receiving bore portion has a cylindrical shape. With this embodiment the bushing can surround the pivot bolt head. In a particular embodiment the bushing may thus be tightened against a side plate of the carrying bracket.

Preferably the head-sided bushing is formed with a radial collar. The radial collar when fitted is located on a side of the arm of the support and/or positioning bracket facing away from the carrying bracket. The collar is shaped and dimensioned such that it does not fit through the aperture in the arm. Hence it provides a locking feature that retains the arm on the bushing.

In a possible embodiment the head-sided tightening means comprises a screw bolt to be screwed into a threaded bore provided in the pivot bolt head. This provides a simple to mount tightening solution for tightening the extension piece to the pivot bolt.

In another possible embodiment the head-sided tightening means comprises a nut to be screwed onto a threaded rod provided on the pivot bolt head. The threaded rod may be formed monolithically with the head. It is also possible to connect the threaded rod otherwise to the head. In a possible embodiment the head is provided with a threaded bore and a threaded rod is screwed into that with one end, while the other end is used for the nut to tighten the extension piece to the bolt head.

In a particular embodiment the head-sided tightening means and the nut-sided tightening means are incorporated in one assembly comprising a rod extending through a longitudinal bore of a hollow pivot bolt, said longitudinal bore extending through the head and the shank of the pivot bolt, said rod having threaded end portions at opposite ends and a pair of nuts cooperating with said threaded end portions. This option is feasible if the pivot bolt has a large enough diameter (e.g. M30) to allow providing a longitudinal through bore without losing too much strength.

Alternatively, the head-sided tightening means and the nut-sided tightening means are incorporated in one assembly comprising a bolt and a nut, the bolt having a head and a shank, said shank extending through a longitudinal bore of a hollow pivot bolt, said longitudinal bore extending through the pivot bolt head and the pivot bolt shank and having a threaded end portion, and said nut cooperating with said threaded end portion.

The invention also relates to a wheel axle suspension provided with an axle lift as described in the above.

In particular the invention also relates to a wheel axle suspension comprising a carrying bracket mounted to a vehicle chassis, a trailing arm attached to an axle body of the wheel axle, a pivot bolt and corresponding nut as well as an air spring,
wherein the trailing arm is pivotably mounted to the carrying bracket by means of the pivot bolt and the corresponding tensioning nut, and the air spring is operative between the chassis and the axle body; and
said pivot bolt having a head and a shank, wherein the head at a side facing away from the shank, is provided with a female fastening means or a male fastening means;
the wheel axle suspension furthermore comprising an axle lift comprising an actuator adapted to lift the wheel axle, a support mounted to the carrying bracket and supporting one end of the actuator, and a positioning bracket mounted to an opposite end of the actuator to engage the trailing arm,
wherein one of the support and the positioning bracket, or both the support and the positioning bracket include two arms each provided with an attachment aperture which is arranged at the pivot bolt,
wherein the axle lift furthermore comprises an extension piece mounted to the head of the pivot bolt and extending through the attachment aperture of one of said arms,
and a head-sided tightening means cooperating with said female or male fastening means of the pivot bolt head and tightening the extension piece to the head.

The invention also relates to a method for mounting an axle lift to an already built up wheel axle unit of a vehicle, the wheel axle unit including an axle body and an axle suspension, the axle suspension comprising on either side of the vehicle a carrying bracket mounted to a vehicle chassis, a trailing arm attached to the axle body, a pivot bolt and corresponding tensioning nut as well as an air spring, wherein the trailing arm is pivotably mounted to the carrying bracket by means of the pivot bolt and the corresponding tensioning nut, and the air spring is operative between the axle body and the chassis, said pivot bolt having a head and a shank, wherein the head at a side facing away from the shank, is provided with a female fastening means or a male fastening means,
the method including the following steps:
- providing an axle lift component having two arms each provided with an aperture,
- hanging one of said arms with its aperture over a (nut-sided) shank end of the pivot bolt,
- providing an extension piece adapted to be mounted to the head of the pivot bolt,
- introduce the extension piece through the aperture of the other one of said arms,
- mount the extension piece to the head of the pivot bolt,
- tighten the extension piece to the head by means of a tightening element adapted to cooperate with said female or male fastening means of the pivot bolt head.

The method according to the invention provides a convenient way to provide an already built up wheel axle unit with an axle lift. The vehicle manufacturer can mount the axle lift easily to the existing vehicle if the customer desires a wheel axle unit with an axle lift, without having to remove the pivot bolt. With the method the axle lift component with two arms may conveniently be a one-piece component, whereby it is possible to assemble this component with the actuator before fitting it to the wheel axle unit. Thus the axle lift may be fitted as a built up unit to the existing wheel axle unit.

The axle lift component may be an axle lift support to which is mounted an actuator adapted to lift the trailing arm and the attached axle body. The axle lift component may also be a positioning bracket that is mounted to an actuator adapted to lift the trailing arm and the attached axle body, at an end of the actuator facing the trailing arm. It is also possible that both the support and the positioning bracket have two arms each provided with an aperture for attaching them to the pivot bolt.

In a possible embodiment of the method a nut-sided bushing is arranged over the shank end of the pivot bolt, and is fitted through the attachment aperture of said other one of said arms. The nut-sided bushing provides a suspension means for the arm of the support and/or the positioning bracket

Preferably the bushing is screwed onto the shank of the pivot bolt.

The male or female fastening means of the pivot bolt head is a male threaded fastening means or a female threaded fastening means, wherein the tightening element is screwed into or onto said male or female fastening means.

The invention also relates to a method for building up a wheel axle unit of a vehicle, the method including the following steps:
- providing a vehicle chassis with a carrying bracket on either lateral side of the chassis,
- providing a pivot bolt for either carrying bracket, said pivot bolt having a head and a shank, wherein the head at a side facing away from the shank, is provided with a female fastening means or a male fastening means,
- attaching a trailing arm at either carrying bracket by means of the pivot bolt,
- tightening the pivot bolt with a corresponding tensioning nut to a predetermined tension,
- attaching an axle body to the trailing arms,
- mounting an air spring operative between the chassis and the axle body,
and furthermore at each of said carrying brackets:
- providing an axle lift including at least an axle lift component having two arms each provided with an aperture,
- hanging one of said arms with its aperture over a shank end of the pivot bolt,
- providing an extension piece adapted to be mounted to the head of the pivot bolt,
- introduce the extension piece through the aperture of the other one of said arms,
- mount the extension piece to the head of the pivot bolt,
- tighten the extension piece to the head by means of a tightening element adapted to cooperate with said female or male fastening means of the pivot bolt head.

The invention also relates to a wheel axle suspension comprising a carrying bracket mounted to a vehicle chassis, a trailing arm attached to an axle body of the wheel axle, a pivot bolt and corresponding nut as well as an air spring,
wherein the trailing arm is pivotably mounted to the carrying bracket by means of the pivot bolt and the corresponding tensioning nut, and the air spring is operative between the chassis and the axle body; and
said pivot bolt having a head and a shank, wherein the head at a side facing away from the shank, is provided with a female fastening means or a male fastening means.

It is observed that the above mentioned steps can be performed in alternative sequences, For example, in a method, first the axle body is attached to the trailing arms, after which the trailing arms are each attached to a carrying bracket by means of the pivot bolt. Subsequently, the pivot bolts are tightened with a corresponding tensioning nut to a predetermined tension, It is observed that typically, the axle is aligned prior to tightening the pivot bolts. Finally, an air spring is mounted operative between the chassis and the axle body and axle lifts are provided and mounted,

In a possible embodiment of the wheel axle suspension the shank of the pivot bolt is extended so as to allow to screw a bush with a female thread on the shank. With "extended" is meant here that the shank is longer than would be necessary to be able to mount the tensioning nut of the pivot bolt. The extension of the length provides the option to mount additional parts such as a nut-sided bushing to the shank adapted to mount an axle lift to.

In a possible embodiment of the wheel axle suspension the pivot bolt is provided at its end opposite the head provided with a female fastening means or a male fastening means for cooperating with a nut-sided tightening means with which a nut-sided bushing can be attached to the shank.

In one embodiment the female fastening means is a threaded bore formed in the shank of the pivot bolt. If an axle lift has to be fitted a screw bolt having a shank extending through the nut-sided bushing can be screwed in the threaded bore.

In another embodiment the male fastening means is an additional shank which is attached to the pivot bolt shank. If an axle lift has to be fitted the additional shank is inserted through a nut-sided bushing, and a nut can be screwed onto the additional shank to attach the nut-sided bushing to the pivot bolt.

In a possible embodiment of the wheel axle suspension said female fastening means of the pivot bolt head is a threaded bore. The threaded bore can cooperate with a screw bolt that can be inserted with its shank through a head-sided bushing and screwed into said threaded bore in the pivot bolt head to attach the head-sided bushing to the head of the pivot bolt.

In another possible embodiment of the wheel axle suspension said male fastening means of the pivot bolt head is a threaded rod provided on the pivot bolt head. The threaded rod can be inserted through a head-sided bushing, and cooperate with a nut screwed onto the threaded rod to attach the head-sided bushing to the head of the pivot bolt.

In yet another possible embodiment of the wheel axle suspension the pivot bolt is a hollow pivot bolt with a longitudinal bore extending through the head and the shank. With this embodiment a rod having threaded end portions at opposite ends can be inserted into said longitudinal bore, such that a head-sided bushing and a nut-sided bushing can be attached by a pair of nuts cooperating with said threaded end portions. Instead of a rod also a shank of a bolt may be inserted through the longitudinal bore.

The invention will become more apparent in the following detailed description with reference to the drawing, in which:
Fig. 1 shows a schematic side elevational view of a wheel axle suspension know from the prior art provided with an axle lift;
Fig. 2 shows a side elevational view of the axle lift shown in Fig. 1 as an assembled unit;
Fig. 3 shows in perspective an exploded view of the axle lift of Fig. 2;
Fig. 4a - 4f show different embodiments of a pivot bolt according to the invention;
Fig. 5 illustrates a head-sided structure of an axle lift attached to pivot bolt according to the invention;
Fig. 6 illustrates an advantageous embodiment of a pivot bolt with associated tensioning nut;
Fig. 7 illustrates another head-sided structure of an axle lift attached to pivot bolt according to the invention;
Fig. 8 illustrates yet another head-sided structure of an axle lift attached to pivot bolt according to the invention;
Fig. 9 illustrates still another nut-sided structure of an axle lift attached to pivot bolt according to the invention;
Fig. 10 shows in a perspective view a nut-sided bushing according to one embodiment of the invention;
Fig. 11 illustrates how the bushing of Fig. 10 is incorporated in a nut-sided structure of an axle lift attached to pivot bolt; and
Fig. 12 illustrates another nut-sided structure of an axle lift attached to pivot bolt according to the invention .

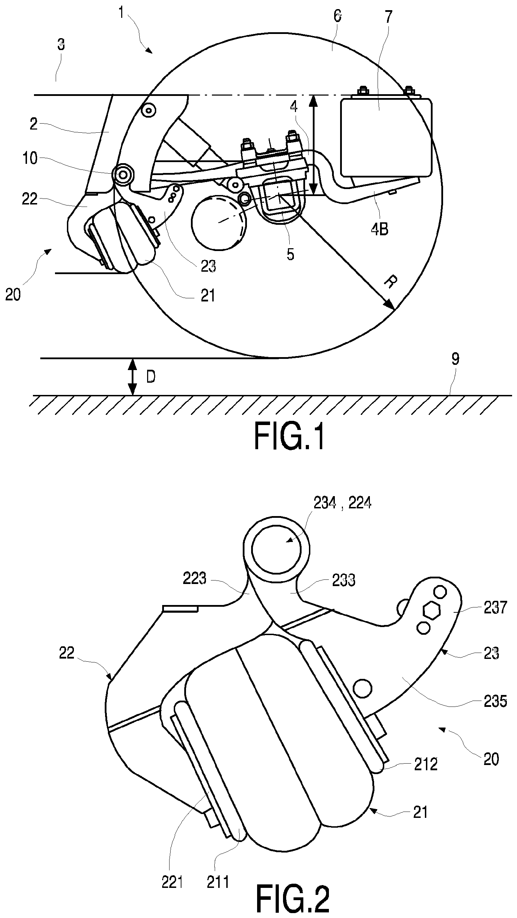

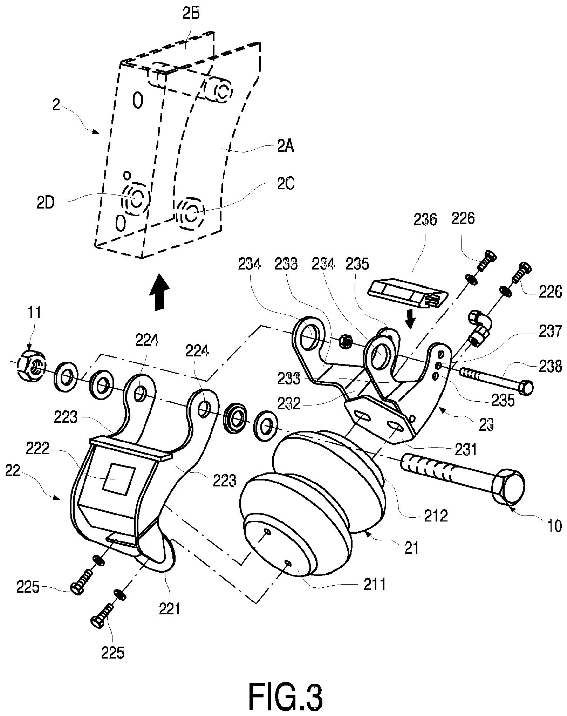

In Fig. 1 is shown a wheel axle suspension 1. The wheel axle suspension comprises a carrying bracket 2 mounted to a vehicle chassis 3. A trailing arm 4 is attached to an axle body 5 of the wheel axle. The trailing arm 4 in this specific embodiment is a flexible trailing arm. A wheel attached to the axle is indicated by reference numeral 6. An air spring 7 is mounted between the chassis 3 and an air spring mounting portion 4B at the rear end of the trailing arm 4. At a front end the trailing arm 4 is pivotably mounted to the carrying bracket 2 by means of a pivot bolt 10 and the corresponding tensioning nut 11 (see Fig. 3).

The wheel axle suspension 1 is part of a wheel axle unit wherein on either side of the vehicle such a suspension 1 is provided and connected to the axle body 5.

As can be seen in Fig. 1 the wheel axle is in a lifted position such that the wheel is lifted a distance D from the road surface 9. To lift the axle the wheel axle suspension 1 has an axle lift 20 comprising an actuator 21 adapted to lift the wheel axle, a support 22 mounted to the carrying bracket 5 and supporting one end of the actuator 21. The axle lift also includes a positioning bracket 23 mounted to an opposite end of the actuator 21 to engage the trailing arm 4.

In Fig. 3 the axle lift 20 is shown in more detail in an exploded view. Furthermore also the carrying bracket 2 is shown. The actuator 21 is a pneumatic bellows.

The support 22 is mounted with a mounting plate 221 to a first end plate 211 of the actuator 21 by means of screw bolts 225. The support furthermore two lateral arms 223. At their upper end the arms 223 have an attachment aperture 224. The lateral arms 223 are rigidly connected to each other by a back plate 222 and by the mounting plate 221. The connection between the plates 222 and 221 and the arms 223 is made by welding. The arms 223 are thus rigidly fixed and their mutual distance is invariable.

The positioning bracket 23 comprises a mounting plate 231. The mounting plate 231 of the positioning bracket 23 is attached to a second end plate 212 of the actuator 21 by means of screw bolts 226. The positioning bracket 23 furthermore has two lateral arms 233. At their upper end the arms 233 have an attachment aperture 234. The lateral arms 233 are rigidly connected to each other by a connection plate 232 and by the mounting plate 231. The connection between the plates 232 and 231 and the arms 233 is made by welding. The arms 233 of the positioning bracket are thus rigidly fixed and their mutual distance is invariable. The positioning bracket 23 furthermore has a pair of legs 235 extending from the mounting plate 231. The legs 235 have a series of through holes 237 for a fixing bolt 238 to fix an engagement cushion 236 between the legs 235. The engagement cushion 236 engages the trailing arm 4 when the axle lift 20 is mounted to the wheel axle suspension 1. The series of holes 237 allow to adapt the position of the engagement cushion 236 to specific dimensions of a suspension.

In Fig. 2 is shown how the axle lift 20 forms a unit when it is assembled. It can be mounted as this unit to a wheel axle suspension 1.

The trailing arm 4 has an eyelet formed at the front end which is not visible in the figures, but which is arranged between the two side plates 2A, 2B in line with bores 2C and 2D in side plates 2A and 2B respectively of the carrying bracket 2. The apertures 224 and 234 of the arms 223 of the support 22 and the positioning bracket 23 respectively, are brought in line with each other (cf. Figs 2 and 3) and arranged in line with the bores 2C, 2D at an outer side of the side plates 2A, 2B. After that the pivot bolt 10 is inserted through the apertures 224, 234, through bores 2C and 2D and through the eyelet of the trailing arm 4. The pivot bolt 10 is then tightened with a tensioning nut 11.

The arms 233 of the positioning bracket 23 are able to pivot around the pivot bolt, just like the trailing arm 4. They have thus the same pivoting axis which is advantageous.

The above described axle lift is known from the prior art and has typically a support 22 with arms 223 at a fixed distance and a positioning bracket 23 with arms 233 at a fixed distance. An axle lift embodiment like the axle lift 20 is convenient in that it can be mounted as the assembled unit as shown in Fig.2. However, a disadvantage is that for mounting the axle lift, the pivot bolt has to be inserted and tightened last. This might not be such a great problem when the wheel axle suspension is equipped from the outset with an axle lift, but it causes a considerable problem when the axle lift has to be retrofitted to the wheel axle suspension.

When retrofitting the axle lift, the pivot bolt 10 and corresponding nut 11 have been tightened to fix the trailing arm to the carrying bracket 2 and align the axle body 5. The pivot bolt would have to be removed from the carrying bracket 2 to be able to mount the axle lift 20. This is undesirable because the axle unit manufacturer or vehicle manufacturer has already aligned the axle and tensioned the pivot bolt to a prescribed tension, which is a complex and time consuming process which needs special equipment. Moreover, the manufacturer only gives a warranty for the suspension if the pivot bolt, which is a critical component, is not tampered with.

The present invention provides a solution to that problem, such that an axle lift similar to the one shown in Figs. 1 - 3, that is with a support and/or a positioning bracket having arms with a fixed mutual distance, can be fitted to the carrying bracket at the pivot bolt, while the latter can remain in its originally tensioned state in the carrying bracket.

It is noted here that the axle lift as shown in Figs. 1 - 3 is only to be regarded as a nonlimiting example. Also other axle lift designs and structures can be considered within the scope of the present invention. The support or positioning bracket may even be composed of separable parts to be within the invention. It is only required that the axle lift has a component such as a support or a positioning bracket having an arm with an attachment aperture to be mounted at the pivot bolt.

The invention proposes to fit the wheel axle suspension with a special pivot bolt at the outset, which allows to mount an axle lift later if so desired. The suspension manufacturer or vehicle manufacturer thus has to fit such a special bolt. Furthermore, according to the invention, the axle lift will include some accessories to cooperate with this special pivot bolt, so as to attach the axle lift to the pivot bolt.

In particular the pivot bolt according to the invention has a head and a shank, wherein the head at a side facing away from the shank, is provided with a female fastening means or a male fastening means. Furthermore, the axle lift comprises an extension piece to be mounted to the head of the pivot bolt and to extend through the attachment aperture 224, 234 of at least one of the support arms 223 or positioning bracket arms 233. Also a head-sided tightening means is provided cooperating with the female or male fastening means of the pivot bolt head and tightening the extension piece to the head of the pivot bolt.

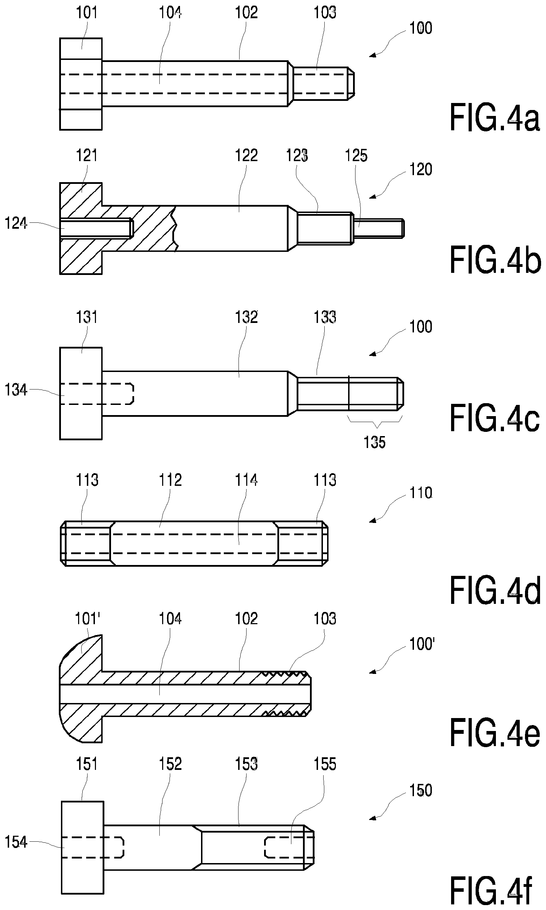

In Figs. 4a to 4f several embodiments of possible pivot bolts are shown. These embodiments shall not be considered limiting and are merely examples of how the pivot bolt can have head-sided and nut-sided tightening features, such that head-sided and nut-sided accessories for mounting an axle lift can be attached to the bolt.

In Fig. 4a is shown a pivot bolt 100 having a head 101 and a shank 102. The shank 102 has a threaded end 103 for cooperating with a tensioning nut 11. The pivot bolt 100 is provided with a longitudinal bore 104 extending through the head 101 and the shank 102.

In Fig. 4e a similar pivot bolt 100' is shown in a sectional view, the only difference being the shape of the head 101', which is more or less mushroom-like instead of cylindrical (as shown in Fig 4a). The reason for another head shape will be described later.

In Fig. 4d a pivot bolt 110 is shown without an integral head. Instead, the pivot bolt 110 has a shank 112 with a threaded end portion 113 at either end. This pivot bolt 110 is provided with a longitudinal bore 114 extending through the entire shank 102. In use a tensioning nut 11 is screwed onto both threaded end portions 113. One of the tensioning nuts 11 can the be considered a pivot bolt head in terms of the present invention.

The bore 104, 114 has a central axis coinciding with the central axis of the pivot bolt 100, 100', 110.

These embodiments of pivot bolts of Fig 4a, 4d and 4e can cooperate with a rod extending through the longitudinal bore 104, 114 of the hollow pivot bolt in order to mount the extension piece to the head 101, 101' or 11 of the pivot bolt 100, 101' or 110. The rod has threaded end portions at opposite ends and a pair of nuts cooperating with said threaded end portions. Another option is to provide a bolt having a head and a shank, wherein the shank has a threaded end portion and is passed through the longitudinal bore 104, 114 of the hollow pivot bolt 100, 110. A corresponding nut can cooperate with a threaded end portion of the shank. The rod or the bolt thus forms the head-sided tightening means cooperating with the female fastening means (the longitudinal bore) of the pivot bolt head and tightening the extension piece to the head 101, 101', 11 of the pivot bolt 100, 100', 110.

Another option is illustrated in Fig. 4b wherein a pivot bolt 120 is shown having a head 121 and a shank 122. The shank 122 has a male threaded portion 123 for cooperating with the tensioning nut 11. In the head 122 a bore 124 extending in the axial direction of the pivot bolt 120 is provided. The bore 124 has a central axis coinciding with the central axis of the pivot bolt 120. In particular the bore 124 is provided with a female thread. In the particular embodiment the bore 124 is a blind bore.

The pivot bolt 120 has at the end opposite to the head 121 a male fastening means 125. The male fastening means 125 comprises a threaded rod that forms an extension of the shank 122 of the pivot bolt. In the embodiment shown the male threaded rod 125 has a smaller diameter than the shank 122 of the pivot bolt 120. Advantageously, the threaded rod 125 can be formed monolithically with the shank 122. It is also possible that the rod 125 is initially a separate part that attached in another way to the shank, e.g. is screwed in a threaded bore (not shown) at the end of the shank 122, or is welded to the shank. The threaded rod can cooperate with an a tightening means such as an additional nut to attach a nut-sided accessory to the pivot bolt.

In Fig. 4c is shown an advantageous and practical embodiment of the pivot bolt. The pivot bolt 130 of Fig. 4c is similar with the pivot bolt 120. It has a head 131 and a shank 132. The head 131 is provided with a (blind) bore 134 extending in the axial direction of the pivot bolt 130. The bore 134 has a central axis coinciding with the central axis of the pivot bolt 130. In particular the bore 124 is provided with a female thread. The shank 132 has a male threaded portion 133 for cooperating with the tensioning nut 11. The male threaded portion 133 has an additional length 135. This additional length has the same function as the threaded rod 125 as is shown in the embodiment of Fig. 4a. Thus a threaded bushing or an additional female tightening means such as an additional nut can be screwed onto the threaded portion 133.

In Fig. 4f is shown a practical embodiment of the pivot bolt. The pivot bolt 150 of Fig. 4f is has a head 151 and a shank 152. The head 151 is provided with a (blind) bore 154 extending in the axial direction of the pivot bolt 150. The bore 154 has a central axis coinciding with the central axis of the pivot bolt 150. In particular the bore 154 is provided with a female thread. The shank 152 has a male threaded portion 153 for cooperating with the tensioning nut 11. At the free end of the shank a blind bore 155 with a female thread is provided. This bore 155 can cooperate with a threaded rod or a screw bolt to tighten a nut-sided accessory to this end of the bolt 150.

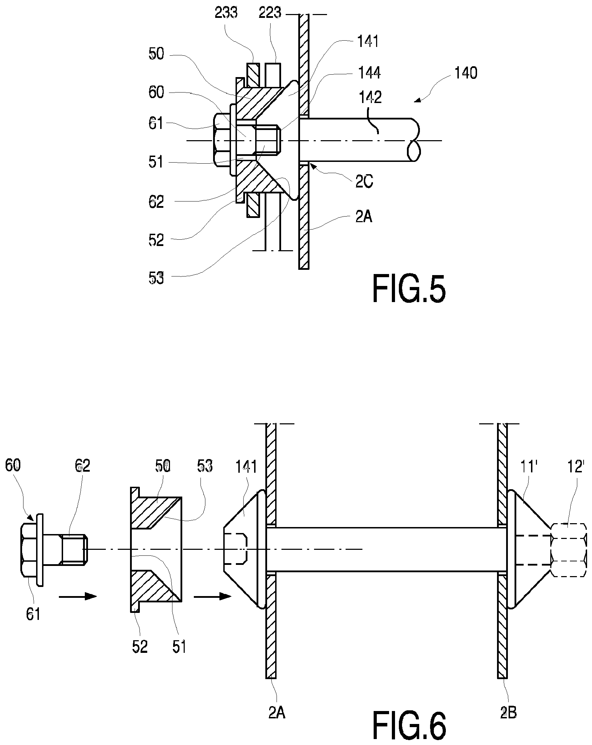

In Fig. 5 is shown a preferred embodiment of a head-sided structure at the side plate 2A of the carrying bracket 2. A pivot bolt 140 extends with the shank through the bore 2C of the side plate 2A. The head 141 of the pivot bolt 140 has a conical shape. In the centre of the head 140 is provided a blind bore 144 with a female thread. The pivot bolt 140 has a shank 142 which extends through the bore 2C of the side plate 2A of the carrying bracket 2.

An extension piece comprising a head-sided bushing 50 having a bore 51 is clamped against the head 141 of the pivot bolt 140 by means of a head-sided tightening means. The head-sided tightening means is in this case a screw bolt 60 with a head 61 and a threaded shank 62 that cooperates with the female threaded bore 144.

The head sided bushing 50 has an outer diameter adapted to be introduced through the attachment apertures 224, 234 of the arms 223, 233. Maybe superfluously it is noted that here by way of example both arms 223, 233 are suspended from the bushing 50, but that with other axle lift designs it can also be one arm suspending from the bushing. The head-sided bushing 50 is formed with a radial collar 52 extending radially outward. The radial collar 52 is positioned on the side of the arms 223 and 233 remote from side plate 2A of the carrying bracket 2 so as to retain the arms 223, 233 in place.

The bore 51 of the head-sided bushing 50 has a receiving bore portion 53 (see also Fig. 6) at the end facing the head 141. The receiving bore portion 53 is complementary to the head 141 of the pivot bolt 140. It receives a portion of the head 141 of the pivot bolt 140.

By tightening the screw bolt 60 the head-sided bushing 50 is tightened on the pivot bolt head 141. Because of the conical shape of the head 141 and the receiving bore portion 53 a tight connection without play is formed. Furthermore, the conical shape has the effect that part of the loads of the arms 223, 233 on the bushing 50 are advantageously born by the head 141. It is prevented that the shank 62 of the screw bolt 60 is loaded too much with shear forces.

In Fig. 6 is shown a structure wherein the pivot bolt 140 has a at the opposite end a corresponding tightening nut 11' screwed on it. This nut 11' also has a conical shape comparable to the head 141. In dashed lines is depicted a break-off head 12' of the nut, which has a hexagonal outer contour and is used to tighten the nut 11' on the pivot bolt 140. If a predefined threshold torque is reached the break-off head 12' breaks of and it is assured that the pivot bolt is tightened to the correct tension. Nuts of this type are known.

A same bushing 50 as is used as head-sided bushing can advantageously be arranged as a nut-sided bushing tightened to the tensioning nut 11'. To tighten the nut-sided bushing 50 to the nut 11' any suitable tightening means as proposed with reference to Figs. 4a - 4f can be used.

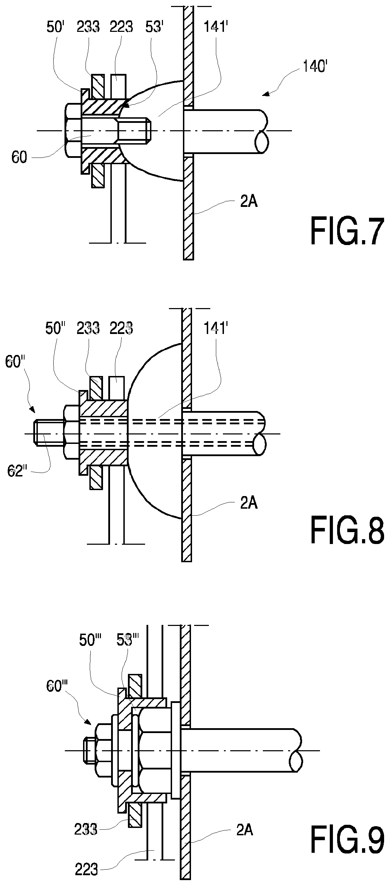

In Fig. 7 is shown a structure wherein the pivot bolt 140' has a "mushroom " head 141'. The bushing 50' has a receiving bore portion 53' with a concave spherical form to receive a portion of the mushroom head 141'. For the rest the structure is similar as the one shown in Fig. 5. This mushroom shape can also be considered as "conical" in terms of the present invention. The receiving bore portion 53' also here results in that a part of the load transferred from the arms 223, 233 to the bushing 50' are born by the head 141' of the pivot bolt 140'.

In Fig. 8 another option is shown, although not preferred. In this embodiment the head-sided bushing 50" has no receiving bore portion and thus abuts the head 141". The bushing 50" with parts 223, 233 suspending from it are thus held in the place by the friction at the interface between the bushing 50" and the head 141" and by the head-sided tightening means 60" used to tighten the bushing 50" against the head 141". This embodiment can only work if the rod or shank 62" of the head sided tightening means 60" has a large enough diameter, because it would otherwise have the risk of collapsing due to the shear forces applied on it .

Another option is shown in Fig. 9, wherein the bushing 50''' has a receiving bore portion 53''' with a cylindrical shape. This bushing 50''' can for example be arranged around pivot bolt heads with a cylindrical or a hexagonal shape. However, in the embodiment shown, the bushing 50''' is part of a nut-sided structure, and is arranged around the pivot bolt nut 11. Tightening of the bushing 50''' takes place by tightening means 60''' similar to the ones described before.

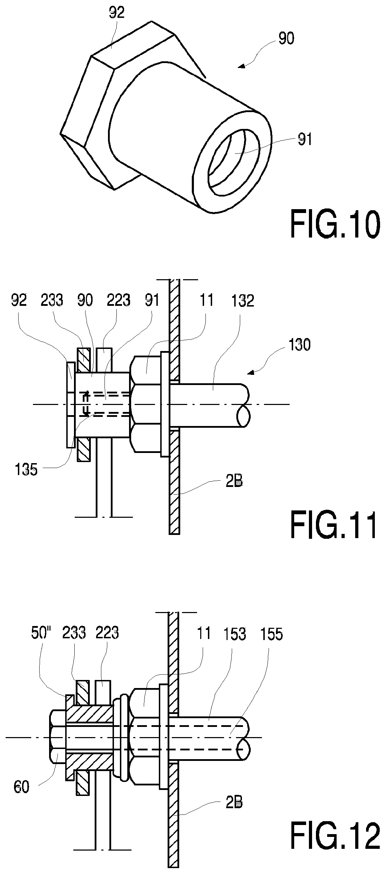

In Fig. 10 and Fig. 11 is illustrated a bushing 90 which has a female threaded bore 91. At one end the bushing has a collar 92, in this case a hexagonal collar. The bushing 90 is adapted to cooperate with a bolt with a threaded end portion as shown in Figs 4b and 4c. Description will be here with reference to Fig. 4c and the same reference numerals are used. The bushing 90 is arranged on the portion 135 of the threaded portion 133 of the pivot bolt, until it abuts the as is shown in Fig. 11 tightening nut 11. The hexagonal shape of the collar 92 facilitates to tighten the bushing 90. This provides an advantageous embodiment with little additional parts to be arranged to attach the axle lift to the pivot bolt. The axle unit manufacturer or vehicle manufacturer only has to mount at the outset a longer pivot bolt 130 at the outset, with a certain head-sided feature (cf. the above) to mount a head-sided bushing.
In Fig. 12 is shown another option to mount a nut-sided bushing to the pivot bolt. The nut-sided bushing is here essentially the same as the head-sided bushing 50" shown in Fig 8. The bushing 50" is tightened against the tensioning nut 11 of the pivot bolt by means of a screw bolt 60 (comparable to the one shown in Fig. 7). Thereto the pivot bolt has a threaded portion 153 with a bore 155 comparable to the bolt 150 shown in Fig. 4f.

In an alternative embodiment, a pivot bolt with the nut-sided bushing shown in Fig. 12 mounted thereon, is provided with a thread less bore, similar to the thread less bore 104 shown in fig. 4e. In this embodiment the bolt 60 extends through said bore and is at its nut-side provided with tightening means similar to the tightening means 60" shown in Fig. 8. This allows for using a high grade bolt 60 with enough pre stress to avoid bending and shear, as was described above in reference to Fig. 8.

It is observed the nut-sided structures shown in Figs. 9, 11, 12 can be combined with the head-sided structures shown in Figs. 5, 7, 8 to form different embodiments of a pivot bolt according to the invention. For example, in an embodiment according to the invention a pivot bolt is provided with a head-side structure as shown in Fig. 7 or 8 and with a nut-sided structure as shown in Fig. 11 and 12 respectively, or the nut-sided structure shown in Fig. 11 could be mounted on part 133 or 125 of the pivot bolt shown in Fig. 4b and 4c respectively.

## Claims

1. Axle lift (20) to be mounted to a wheel axle suspension (1) of a vehicle;
the wheel axle suspension (1) including a carrying bracket (2) mounted to a vehicle chassis (3), a trailing arm (4) attached to an axle body (5) of the wheel axle, a pivot bolt (100; 100'; 110; 120; 130; 140; 140'; 150) and corresponding nut (11; 11') as well as an air spring (7),
wherein the trailing arm (4) is pivotably mounted to the carrying bracket (2) by means of the pivot bolt (100; 100'; 110; 120; 130; 140; 140'; 150) and the corresponding tensioning nut (11; 11'), and the air spring (2) is operative between the chassis (3) and the axle body (5); and
said pivot bolt (100; 100'; 110; 120; 130; 140; 140'; 150) having a head (101; 101'; 121; 131; 141; 151) and a shank (102; 112; 122; 132; 142; 152), wherein the head (101; 101'; 121; 131; 141; 151) at a side facing away from the shank (102; 112; 122; 132; 142; 152), is provided with a female fastening means (104; 114; 124; 134; 144; 154) or a male fastening means;
the axle lift (20) comprising an actuator (21) adapted to lift the wheel axle, a support (22) to be mounted to the carrying bracket (2) and supporting one end of the actuator (21), and a positioning bracket (23) mounted to an opposite end of the actuator (21), facing the trailing arm (4),
wherein one of the support (22) and the positioning bracket (23), or both the support (22) and the positioning bracket (23) include two arms (223, 233), each provided with an attachment aperture (224, 234) and adapted to be arranged at the pivot bolt (100; 100'; 110; 120; 130; 140; 140'; 150),
wherein the axle lift (20) furthermore comprises an extension piece (50; 50'; 50"; 50''') adapted to be mounted to the head (101; 101'; 121; 131; 141; 141'; 151) of the pivot bolt and adapted to be introduced through the attachment aperture (224, 234) of one of said arms (223, 233),
and a head-sided tightening means (60; 60"; 60''') adapted to cooperate with said female (104; 114; 124; 134; 144; 154 or male fastening means of the pivot bolt head (101; 101'; 121; 131; 141; 151) for tightening the extension piece (50; 50'; 50"; 50''') to the head (101; 101'; 121; 131; 141; 151).

2. Axle lift according to claim 1, furthermore comprising a nut-sided bushing (50; 50'; 50"; 50'''; 90) which is to be arranged over the shank end (135) of the pivot bolt against the tensioning nut (11), and adapted to fit through the attachment aperture (224, 234) of the other one of said arms (223, 233), and which nut-sided bushing (50; 50'; 50"; 50'''; 90) preferably is provided with a radial collar (52; 92).

3. Axle lift according to claim 2, wherein the nut-sided bushing (90) has a female thread (91) which is adapted to screw it on the shank of the pivot bolt.

4. Axle lift according to claim 2, furthermore comprising a nut-sided tightening means (60) cooperating with a male fastening means or female fastening means (155) provided at a pivot bolt end opposite the head, for attaching the nut-sided bushing (50; 50'; 50"; 50''').

5. Axle lift according to claim 4, wherein the female fastening means is a threaded bore (155) formed in the shank (153) of the pivot bolt, and wherein said nut-sided tightening means comprises a screw bolt (60) having a shank extending in use through the nut-sided bushing (50") and screwed in the threaded bore (155).

6. Axle lift according to claim 4, wherein the male fastening means is an additional shank (125) which is attached to the pivot bolt shank (122) and which in use extends through the bushing (50; 50'; 50"; 50"'), and wherein said nut-sided tightening means element comprises a nut to be screwed onto the additional shank.

7. Axle lift according to claim 1, wherein the extension piece comprises a head-sided bushing (50; 50'; 50"; 50"') having a bore, which head-sided bushing is clamped against the head (101; 101'; 121; 131; 141; 151) of the pivot bolt by means of the head-sided tightening means (60), and which head-sided bushing (50; 50'; 50"; 50''') preferably is formed with a radial collar (52).

8. Axle lift according to claim 7, wherein the bore of the head-sided bushing has at least a receiving bore portion (53; 53'; 53"') which is complementary to the head (101; 101'; 121; 131; 141; 141'; 151) of the pivot bolt so as to receive at least a portion of the head of the pivot bolt.

9. Axle lift according to any one of claims -7 - 8, wherein the head-sided tightening means comprises a screw bolt (60) to be screwed into a threaded bore (124; 134; 144; 154) provided in the pivot bolt head (121; 131; 141; 141'; 151).

10. Axle lift according to any one of claims - 7- 8, wherein the head-sided tightening means (60", 60''') comprises a nut to be screwed onto a threaded rod provided on the pivot bolt head.

11. Axle lift according to any one of claims 1, 2, 7 - 8, wherein the head-sided tightening means and the nut-sided tightening means are incorporated in one assembly comprising a rod extending through a longitudinal bore (104; 114) of a hollow pivot bolt (100; 100'; 110), said longitudinal bore extending through the head and the shank, said rod having threaded end portions at opposite ends and a pair of nuts cooperating with said threaded end portions.

12. Axle lift according to any one of claims 1, 2, 7 - 8, wherein the head-sided tightening means and the nut-sided tightening means are incorporated in one assembly comprising a bolt and a nut, the bolt having a head and a shank, said shank extending through a longitudinal bore (104; 114) of a hollow pivot bolt (100; 100'; 110), said longitudinal bore extending through the pivot bolt head and the pivot bolt shank and having a threaded end portion, and said nut cooperating with said threaded end portion.

13. Wheel axle suspension (1) comprising a carrying bracket (2) mounted to a vehicle chassis (3), a trailing arm (4) attached to an axle body (5) of the wheel axle, a pivot bolt (100; 100'; 110; 120; 130; 140; 140'; 150) and corresponding nut (11, 11') as well as an air spring (7),
wherein the trailing arm (4) is pivotably mounted to the carrying bracket (2) by means of the pivot bolt (100; 100'; 110; 120; 130; 140; 140'; 150) and the corresponding tensioning nut (11, 11'), and the air spring (2) is operative between the chassis (3) and the axle body (5); and
said pivot bolt (100; 100'; 110; 120; 130; 140; 140'; 150) having a head (101; 101'; 121; 131; 141; 151) and a shank (102; 112; 122; 132; 142; 152), wherein the head (101; 101'; 121; 131; 141; 151) at a side facing away from the shank (102; 112; 122; 132; 142; 152), is provided with a female fastening means (104; 114; 124; 134; 144; 154) or a male fastening means;
the wheel axle suspension (1) furthermore comprising an axle lift (20) comprising an actuator (21) adapted to lift the wheel axle, a support (22) mounted to the carrying bracket (2) and supporting one end of the actuator (21), and a positioning bracket (23) mounted to an opposite end of the actuator (21) to engage the trailing arm (4),
wherein one of the support (22) and the positioning bracket (23), or both the support (22) and the positioning bracket (23) include two arms (223, 233) each provided with an attachment aperture (224, 234) which is arranged at the pivot bolt (100; 100'; 110; 120; 130; 140; 140'; 150),
wherein the axle lift (20) furthermore comprises an extension piece (50; 50'; 50"; 50''') mounted to the head (101; 101'; 121; 131; 141; 151) of the pivot bolt and extending through the attachment aperture (224, 234) of one of said arms (223, 233),
and a head-sided tightening means (60; 60"; 60''') cooperating with said female or male fastening means (104; 114; 124; 134; 144; 154) of the pivot bolt head (101; 101'; 121; 131; 141; 151) and tightening the extension piece (50; 50'; 50"; 50''') to the head (101; 101'; 121; 131; 141; 151).

14. Method for building up a wheel axle unit of a vehicle,
the method including the following steps:
- providing a vehicle chassis (3) with a carrying bracket (2) on either lateral side of the chassis (3),
- providing a pivot bolt (100; 100'; 110; 120; 130; 140; 140'; 150) for either carrying bracket (2), said pivot bolt (100; 100'; 110; 120; 130; 140; 140'; 150) having a head (101; 101'; 121; 131; 141; 151) and a shank (102; 112; 122; 132; 142; 152), wherein the head (101; 101'; 121; 131; 141; 151) at a side facing away from the shank (102; 112; 122; 132; 142; 152), is provided with a female fastening means (104; 114; 124; 134; 144; 154) or a male fastening means,
- attaching a trailing arm (4) at either carrying bracket (2) by means of the pivot bolt (100; 100'; 110; 120; 130; 140; 140'; 150),
- tightening the pivot bolt (100; 100'; 110; 120; 130; 140; 140'; 150) with a corresponding tensioning nut (11, 11') to a predetermined tension,
- attaching an axle body (5) to the trailing arms (4),
- mounting an air spring (7) operative between the chassis (3) and the axle body (5),
and furthermore at each of said carrying brackets (2):
- providing an axle lift (20) including at least an axle lift component (22; 23) having two arms (223; 233) each provided with an aperture (224; 234),
- hanging one of said arms (223; 233) with its aperture (224; 234) over a shank end of the pivot bolt (100; 100'; 110; 120; 130; 140; 140'; 150),
- providing an extension piece (50; 50'; 50"; 50''') adapted to be mounted to the head (101; 101'; 121; 131; 141; 151) of the pivot bolt (100; 100'; 110; 120; 130; 140; 140'; 150),
- introduce the extension piece (50; 50'; 50"; 50''') through the aperture (224; 234) of the other one of said arms (223; 233),
- mount the extension piece (50; 50'; 50"; 50''') to the head (101; 101'; 121; 131; 141; 151) of the pivot bolt (100; 100'; 110; 120; 130; 140; 140'; 150),
- tighten the extension piece (50; 50'; 50"; 50''') to the head (101; 101'; 121; 131; 141; 151) by means of a tightening element (60; 60"; 60''') adapted to cooperate with said female or male fastening means (104; 114; 124; 134; 144; 154) of the pivot bolt head (101; 101'; 121; 131; 141; 151).

15. Method for mounting an axle lift (20) to an already built up wheel axle unit of a vehicle, the wheel axle unit including an axle body (5) and an axle suspension (1), the axle suspension (1) comprising on either side of the vehicle a carrying bracket (2) mounted to a vehicle chassis (3), a trailing arm (4) attached to the axle body (5), a pivot bolt (100; 100'; 110; 120; 130; 140; 140'; 150) and corresponding tensioning nut (11, 11') as well as an air spring (7), wherein the trailing arm (4) is pivotably mounted to the carrying bracket (2) by means of the pivot bolt (100; 100'; 110; 120; 130; 140; 140'; 150) and the corresponding tensioning nut (11, 11'), and the air spring (7) is operative between the axle body (5) and the chassis (3), said pivot bolt (100; 100'; 110; 120; 130; 140; 140'; 150) having a head (101; 101'; 121; 131; 141; 151) and a shank (102; 112; 122; 132; 142; 152), wherein the head (101; 101'; 121; 131; 141; 151) at a side facing away from the shank (102; 112; 122; 132; 142; 152), is provided with a female fastening means (104; 114; 124; 134; 144; 154) or a male fastening means,
the method including the following steps:
- providing an axle lift component (22; 23) having two arms (223; 233) each provided with an aperture (224; 234),
- hanging one of said arms (223; 233) with its aperture (224; 234) over a shank end of the pivot bolt (100; 100'; 110; 120; 130; 140; 140'; 150),
- providing an extension piece (50; 50'; 50"; 50''') adapted to be mounted to the head (101; 101'; 121; 131; 141; 151) of the pivot bolt (100; 100'; 110; 120; 130; 140; 140'; 150),
- introduce the extension piece (50; 50'; 50"; 50''') through the aperture (224; 234) of the other one of said arms (223; 233),
- mount the extension piece (50; 50'; 50"; 50''') to the head (101; 101'; 121; 131; 141; 151) of the pivot bolt (100; 100'; 110; 120; 130; 140; 140'; 150),
- tighten the extension piece (50; 50'; 50"; 50''') to the head (101; 101'; 121; 131; 141; 151) by means of a tightening element (60; 60"; 60''') adapted to cooperate with said female or male fastening means (104; 114; 124; 134; 144; 154) of the pivot bolt head (101; 101'; 121; 131; 141; 151).

## Patentansprüche

1. Achslift (20) zur Montage an einer Radachsaufhängung (1) eines Fahrzeugs;
wobei die Radachsenaufhängung (1) eine an einem Fahrzeugchassis (3) angebrachte Tragkonsole (2), einen Längslenker (4), der an einem Achskörper (5) der Radachse angebracht ist, einen Schwenkbolzen (100; 100'; 110; 120; 130;140; 140'; 150) und eine entsprechende Mutter (11, 11') sowie eine Luftfeder (7) umfasst,
wobei der Längslenker (4) mittels des Schwenkbolzens (100; 100'; 110; 120; 130; 140; 140'; 150) schwenkbar an der Tragkonsole (2) und der entsprechenden spannenden Mutter (11, 11') angeordnet ist, und die Luftfeder (7) zwischen dem Chassis (3) und dem Achskörper (5) wirksam ist; und
der genannte Schwenkbolzen (100; 100'; 110; 120; 130;140; 140'; 150) einen Kopf (101; 101'; 121; 131; 141; 151) und einen Schaft (102; 112; 122; 132; 142; 152) aufweist, wobei der Kopf (101; 101'; 121; 131; 141; 151) an einer dem Schaft (102; 112; 122; 132; 142; 152) abgewandten Seite mit einem weiblichen Befestigungsmittel (104; 114; 124; 134; 144; 154) oder einem männlichen Befestigungsmittel versehen ist;
welche Achslift (20) einen zum Anheben der Radachse ausgelegten Aktuator (21), einen Träger (22), der an der Tragkonsole (2) anzubringen ist und ein Ende des Aktuators (21) trägt, und einen Positionierbügel (23), der an einem dem Längslenker (4) zugewandten, gegenüberliegenden Ende des Aktuators (21) angeordnet ist, umfasst,
wobei entweder eines von dem Träger (22) und dem Positionierbügel (23) oder der Träger (22) und der Positionierbügel (23) zwei Arme (223, 233) aufweisen, die jeweils mit einer Befestigungsöffnung (224, 234) versehen sind und ausgelegt sind um an dem Schwenkbolzen (100; 100'; 110; 120; 130; 140; 140'; 150) angeordnet zu werden,
wobei der Achslift (20) weiterhin ein Verlängerungsstück (50; 50'; 50"; 50''') aufweist, das ausgelegt ist, an dem Kopf (101; 101'; 121; 131; 141; 141'; 151) des Schwenkbolzens montiert zu werden und ausgelegt ist, durch die Befestigungsöffnung (224, 234) eines der genannten Arme (223, 233) eingeführt zu werden,
und ein kopfseitiges Spannmittel (60; 60", 60'''), das dazu eingerichtet ist, mit dem genannten weiblichen (104; 114; 124; 134; 144; 154) oder männlichen Befestigungsmittel des Schwenkbolzenkopfes (101; 101'; 121; 131; 141; 151) zusammen zu wirken, um das Verlängerungsstück (50; 50'; 50"; 50''') an dem Kopf (101; 101'; 121; 131; 141; 151) festzuspannen.

2. Achslift nach Anspruch 1, ferner umfassend eine mutterseitige Buchse (50; 50'; 50"; 50'''; 90), die über dem Schaftende (135) des Schwenkbolzens gegen die Spannmutter (11) anzuordnen ist und die dazu eingerichtet ist, durch die Befestigungsöffnung (224, 234) des anderen der genannten Arme (223, 233) zu passen, und wobei die mutterseitige Buchse (50; 50'; 50"; 50'''; 90) vorzugsweise mit einem radialen Kragen versehen ist.

3. Achslift nach Anspruch 2, wobei die mutterseitige Buchse (90) ein Innengewinde (91) aufweist, das dazu eingerichtet ist, auf den Schaft des Schwenkbolzens aufgeschraubt zu werden.

4. Achslift nach Anspruch 2, ferner umfassend ein mutterseitiges Spannmittel (60), das mit einem männlichen Befestigungsmittel oder einem weiblichen Befestigungsmittel (155) zusammenwirkt, welches an einem dem Kopf gegenüberliegenden Schwenkbolzenende vorgesehen ist, um die mutterseitige Buchse (50; 50'; 50"; 50''') zu befestigen.

5. Achslift nach Anspruch 4, wobei das weibliche Befestigungsmittel eine Gewindebohrung (155) ist, die in dem Schaft (153) des Schwenkbolzens ausgebildet ist, und wobei das mutterseitige Spannmittel einen Schraubbolzen (60) aufweist, der einen Schaft aufweist, welcher sich im Gebrauch durch die mutterseitige Buchse (50") erstreckt und in die Gewindebohrung (155) eingeschraubt ist.

6. Achslift nach Anspruch 4, wobei das männliche Befestigungsmittel ein zusätzlicher Schaft (125) ist, der an dem Schwenkbolzenschaft (122) befestigt ist, und der sich im Gebrauch durch die Buchse (50; 50'; 50"; 50''') erstreckt, und wobei das genannte mutterseitige Spannmittelelement eine auf den zusätzlichen Schaft aufschraubbare Mutter umfasst.

7. Achslift nach Anspruch 1, wobei das Verlängerungsstück eine kopfseitige Buchse (50; 50'; 50"; 50''') umfasst, die eine Bohrung aufweist, welche kopfseitige Buchse gegen den Kopf (101; 101'; 121; 131; 141; 151) des Schwenkbolzens mittels des kopfseitigen Spannmittels (60) gespannt ist, und welche kopfseitige Buchse (50; 50'; 50"; 50''') vorzugsweise mit einem radialen Kragen (52) ausgebildet ist.

8. Achslift nach Anspruch 7, wobei die Bohrung der kopfseitigen Buchse mindestens einen Aufnahmebohrungsabschnitt (53; 53'; 53''') aufweist, der komplementär zu dem Kopf (101; 101'; 121; 131; 141; 141'; 151) des Schwenkbolzens ist, um zumindest einen Teil des Kopfes des Schwenkbolzens aufzunehmen.

9. Achslift nach einem beliebigen der Ansprüche 7 - 8, wobei das kopfseitige Spannmittel einen Schraubbolzen (60) umfasst, der in eine in dem Schwenkbolzenkopf (121; 131; 141; 141'; 151) vorgesehene Gewindebohrung (124; 134; 144; 154) eingeschraubt werden kann.

10. Achslift nach einem beliebigen der Ansprüche 7 - 8, wobei das kopfseitige Spannmittel (60", 60''') eine Mutter aufweist, die auf eine Gewindestange aufgeschraubt werden kann, welche am Kopf des Schwenkbolzens vorgesehen ist.

11. Achslift nach einem beliebigen der Ansprüche 1, 2, 7 - 8, wobei das kopfseitige Spannmittel und das mutterseitige Spannmittel in einer Baugruppe aufgenommen sind, die einen Stab aufweist, der sich durch eine längliche Bohrung (104; 114) eines Schwenkbolzens (100; 100'; 110) erstreckt, wobei sich die genannte längliche Bohrung durch den Kopf und den Schaft erstreckt, wobei der genannte Stab mit Gewinde versehene Endbereiche an gegenüberliegenden Enden und ein Paar Muttern hat, die mit den mit Gewinde versehenen Endbereich zusammenwirken.

12. Achslift nach einem der Ansprüche 1, 2, 7-8, wobei das kopfseitige Spannmittel und das mutterseitige Spannmittel in einer Baugruppe aufgenommen sind, die einen Bolzen und eine Mutter aufweist, wobei der Bolzen einen Kopf und einen Schaft aufweist, der sich durch eine längliche Bohrung (104; 114) eines hohlen Schwenkbolzens (100; 100'; 110) erstreckt, die sich durch den Schwenkbolzenkopf und den Schwenkbolzenschaft erstreckt und einen Gewindeendabschnitt hat, und wobei die genannte Mutter mit dem Gewindeendabschnitt zusammenwirkt.

13. Radachsaufhängung (1) mit einer an einem Fahrzeugchassis (3) montierten Tragkonsole (2), einem an einem Achskörper (5) der Radachse angebrachten Längslenker (4), einem Schwenkbolzen (100; 100'; 110; 120; 130; 140; 140'; 150) und einer entsprechenden Mutter (11, 11') sowie einer Luftfeder (7),
wobei der Längslenker (4) mittels des Schwenkbolzens (100; 100'; 110; 120; 130; 140; 140'; 150) und der entsprechenden Spannmutter (11, 11') schwenkbar an der Tragkonsole (2) angeordnet ist und die Luftfeder (7) zwischen dem Chassis (3) und dem Achskörper (5) wirksam ist; und
der genannte Schwenkbolzen (100; 100'; 110; 120; 130;140; 140'; 150) einen Kopf (101; 101'; 121; 131; 141; 151) und einen Schaft (102; 112; 122; 132; 142; 152) aufweist, wobei der Kopf (101; 101'; 121; 131; 141; 151) an einer dem Schaft (102; 112; 122; 132; 142; 152) abgewandten Seite mit einem weiblichen Befestigungsmittel (104; 114; 124; 134; 144; 154) oder einem männlichen Befestigungsmittel versehen ist;
welche Radachsaufhängung (1) weiterhin einen Achslift (20) hat, der einen zum Anheben der Radachse ausgelegten Aktuator (21), einen Träger (22), der an der Tragkonsole (2) anzuordnen ist und ein Ende des Aktuators (21) trägt, und einen Positionierbügel (23) aufweist, der an einem dem Längslenker (4) zugewandten, gegenüberliegenden Ende des Aktuators (21) angeordnet ist,
wobei entweder eines von dem Träger (22) oder dem Positionierbügel (23) oder der Träger (22) und der Positionierbügel (23) zwei Arme (223, 233) aufweisen, die jeweils mit einer Befestigungsöffnung (224, 234) versehen sind und ausgelegt sind, an dem Schwenkbolzen (100; 100'; 110; 120; 130; 140; 140'; 150) angeordnet zu werden,
wobei der Achslift (20) weiterhin ein Verlängerungsstück (50; 50'; 50"; 50''') aufweist, das ausgelegt ist, an dem Kopf (101; 101'; 121; 131; 141; 141'; 151) des Schwenkbolzens montiert zu werden und ausgelegt ist, durch die Befestigungsöffnung (224, 234) eines der genannten Arme (223, 233) eingeführt zu werden,
und ein kopfseitiges Spannmittel (60; 60", 60'''), das dazu eingerichtet ist, mit dem genannten weiblichen (104; 114; 124; 134; 144; 154) oder männlichen Befestigungsmittel des Schwenkbolzenkopfes (101; 101'; 121; 131; 141; 151) zusammen zu wirken, um das Verlängerungsstück (50; 50'; 50"; 50''') an dem Kopf (101; 101'; 121; 131; 141; 151) festzuspannen.

14. Verfahren zum Herstellen einer Radachseneinheit eines Fahrzeugs, wobei das Verfahren die folgenden Schritte umfasst:
- Bereitstellen eines Fahrzeugchassis (3) mit einer Tragkonsole (2) an beiden Seiten des Fahrgestells (3),
- Bereitstellen eines Schwenkbolzens (100; 100'; 110; 120; 130; 140; 140'; 150) für jede Tragkonsole (2), wobei der Schwenkbolzen (100; 100'; 110; 120; 130; 140; 140'; 150) einen Kopf (101; 101'; 121; 131; 141; 151) und einen Schaft (102; 112; 122; 132; 142; 152) aufweist, wobei der Kopf (101; 101'; 121; 131; 141; 151) an einer von dem Schaft (102; 112; 122; 132; 142; 152) abgewandten Seite mit einem weiblichen Befestigungsmittel oder einem männlichen Befestigungsmittel versehen ist,
- Befestigen eines Längslenkers (4) an jedem Tragbügel (2) mittels des Schwenkbolzens (100; 100'; 110; 120; 130; 140; 140'; 150),
- Festziehen des Schwenkbolzens (100; 100'; 110; 120; 130; 140; 140'; 150) mit einer entsprechenden Spannmutter (11, 11') auf eine vorbestimmte Spannung,
- Befestigen eines Achskörpers (5) an den Längslenkern (4),
- Montieren einer zwischen dem Fahrgestell (3) und dem Achskörper (5) wirksamen Luftfeder (7),
und ferner an jedem der Tragbügel (2):
- Bereitstellen eines Achslifts (20) mit zumindest einer Achshebekomponente (22; 23), die zwei Arme aufweist, die jeweils mit einer Öffnung (224; 234) versehen sind,
- Einhängen eines der genannten Arme mit seiner Öffnung über ein Schaftende des Schwenkbolzens (100; 100'; 110; 120; 130; 140; 140'; 150),
- Bereitstellen eines Verlängerungsstücks (50; 50'; 50"; 50'''), das geeignet ist, am Kopf (101; 101'; 121; 131; 141; 151) des Schwenkbolzens (100; 100'; 110; 120; 130; 140; 140'; 150) montiert zu werden,
- Einführen des Verlängerungsstücks (50; 50'; 50"; 50''') durch die Öffnung (224, 234) des anderen der genannten Arme (223, 233),
- Anbringen des Verlängerungsstücks (50; 50'; 50"; 50''') an dem Kopf (101; 101'; 121; 131; 141; 151) des Schwenkbolzens (100; 100'; 110; 120; 130; 140; 140'; 150),
- Spannen des Verlängerungsstücks (50; 50'; 50"; 50''') gegen den Kopf (101; 101'; 121; 131; 141; 151) mittels eines Spannelements (60; 60'; 60"), das dazu eingerichtet ist, mit dem weiblichen oder männlichen Befestigungsmittel (104; 114; 124; 134; 144; 154) des Schwenkbolzenkopfes (101; 101'; 121; 131; 141; 151) zusammenzuwirken.

15. Verfahren zur Montage eines Achslifts (20) an eine bereits aufgebaute Radachseinheit eines Fahrzeugs, wobei die Radachseinheit einen Achskörper (5) und eine Achsaufhängung (1) umfasst, wobei die Achsaufhängung (1) auf jeder Fahrzeugseite eine Tragkonsole (2), die an einem Fahrzeugchassis (3) befestigt ist, einen an dem Achskörper (5) befestigten Längslenker (4), einen Schwenkbolzen (100; 100'; 110; 120; 130; 140; 140'; 150) und eine entsprechende Spannmutter (11, 11') sowie eine Luftfeder (7) aufweist, wobei der Längslenker (4) schwenkbar an der Tragkonsole (2) mittels des Schwenkbolzens (100; 100'; 110; 120; 130; 140; 140'; 150) und der entsprechenden Spannmutter (11, 11') montiert ist, und wobei die Luftfeder (7) zwischen dem Achskörper (5) und dem Chassis (3) wirksam ist, wobei der Schwenkbolzen (100; 100'; 110; 120; 130; 140; 140'; 150) einen Kopf (101; 101'; 121; 131; 141; 151) und einen Schaft (102; 112; 122; 132; 142; 152) aufweist, wobei der Kopf (101; 101'; 121; 131; 141; 151) an einer dem Schaft (102; 112; 122; 132; 142; 152) abgewandten Seite mit einem weiblichen Befestigungsmittel oder einem männlichen Befestigungsmittel versehen ist,
wobei das Verfahren die folgenden Schritte umfasst:
- Bereitstellen einer Achsliftkomponente (22; 23) mit zwei Armen (223; 233), die jeweils eine Öffnung (224; 234) haben,
- Einhängen eines der genannte Arme mit seiner Öffnung über ein Schaftende des Schwenkbolzens (100; 100'; 110; 120; 130; 140; 140'; 150),
- Bereitstellen eines Verlängerungsstücks (50; 50'; 50"; 50'''), das ausgelegt ist, am Kopf (101; 101'; 121; 131; 141; 151) des Schwenkbolzens (100; 100'; 110; 120; 130; 140; 140'; 150) montiert zu werden,
- Einführen des Verlängerungsstücks (50; 50'; 50"; 50''') durch die Öffnung des anderen der genannten Arme (223; 233),
- Anbringen des Verlängerungsstücks (50; 50'; 50"; 50''') am Kopf (101; 101'; 121; 131; 141; 151) des Schwenkbolzens (100; 100'; 110; 120; 130; 140; 140'; 150),
- Spannen des Verlängerungsstücks (50; 50'; 50"; 50''') gegen den Kopf (101; 101'; 121; 131; 141; 151) mittels eines Spannelements (60; 60"; 60'''), das dazu eingerichtet ist, mit dem weiblichen oder männlichen Befestigungsmittel (104; 114; 124; 134; 144; 154) des Schwenkbolzenkopfes (101; 101'; 121; 131; 141; 151) zusammenzuwirken.

## Revendications

1. Dispositif de levage d'essieu (20) à monter sur une suspension d'essieu (1) de roue d'un véhicule;
la suspension d'essieu (1) de roue comprenant une console porteuse (2) montée sur un châssis (3) de véhicule, un bras tiré (4) attaché à un corps d'essieu (5) de l'essieu de roue, un boulon de pivotement (100; 100'; 110; 120; 130; 140; 140'; 150) et un écrou (11; 11') correspondant, ainsi qu'un ressort pneumatique (7),
dans lequel le bras tiré (4) est monté de manière pivotante sur la console porteuse (2) au moyen du boulon de pivotement (100; 100'; 110; 120; 130; 140; 140'; 150) et de l'écrou (11; 11') de serrage correspondant, et le ressort pneumatique (2) fonctionne entre le châssis (3) et le corps d'essieu (5); et
ledit boulon de pivotement (100; 100'; 110; 120; 130; 140; 140'; 150) ayant une tête (101; 101'; 121; 131; 141; 151) et une tige (102; 112; 122; 132; 142; 152), dans lequel la tête (101; 101'; 121; 131; 141; 151) est munie d'un moyen de fixation femelle (104; 114; 124; 134; 144; 154) ou d'un moyen de fixation mâle d'un côté opposé à la tige (102; 112; 122; 132; 142; 152);
le dispositif de levage d'essieu (20) comprenant en outre un actionneur (21) adapté pour lever l'essieu de roue, un support (22) destiné à être monté sur la console porteuse (2) et supportant une extrémité de l'actionneur (21), et un support de positionnement (23) monté sur une extrémité opposée de l'actionneur (21), face au bras tiré (4),
dans lequel l'un du support (22) et du support de positionnement (23), ou à la fois le support (22) et le support de positionnement (23) comprennent deux bras (223, 233), chacun muni d'une ouverture de fixation (224, 234) et adapté pour être agencés au niveau du boulon de pivotement (100; 100'; 110; 120; 130; 140; 140'; 150),
dans lequel le dispositif de levage d'essieu (20) comprend en outre une pièce d'extension (50; 50'; 50"; 50''') destinée à être montée sur la tête (101; 101'; 121; 131; 141; 141'; 151) du boulon de pivotement et configurée pour être introduite par l'ouverture de fixation (224, 234) de l'un desdits bras (223, 233),
et un moyen de serrage à tête (60; 60"; 60''') adapté pour coopérer avec ledit moyen de fixation femelle (104; 114; 124; 134; 144; 154) ou mâle de la tête (101; 101'; 121; 131; 141; 151) du boulon de pivotement pour serrer la pièce d'extension (50; 50'; 50"; 50''') sur la tête (101; 101'; 121; 131; 141; 151).

2. Dispositif de levage d'essieu selon la revendication 1, comprenant en outre une douille à face écrou (50; 50'; 50"; 50''' ; 90) destinée à être agencée sur l'extrémité de tige (135) du boulon de pivotement contre l'écrou (11) de serrage, et adaptée pour passer à travers l'ouverture de fixation (224, 234) de l'autre desdits bras (223, 233), et laquelle douille à face écrou (50; 50'; 50"; 50'''; 90) est préférablement pourvu d'une collerette radiale (52; 92).

3. Dispositif de levage d'essieu selon la revendication 2, dans lequel la douille à face écrou (90) a un filet femelle (91) qui est adapté pour le visser sur la tige du boulon de pivotement.

4. Dispositif de levage d'essieu selon la revendication 2, comprenant en outre un moyen de serrage à face écrou (60) coopérant avec un moyen de fixation mâle ou un moyen de fixation femelle (155) prévu à une extrémité du boulon de pivotement opposée à la tête, pour attacher la douille à face écrou (50 ; 50' ; 50" ; 50''').

5. Dispositif de levage d'essieu selon la revendication 4, dans laquelle le moyen de fixation femelle est un alésage fileté (155) formé dans la tige (153) du boulon de pivotement, et dans laquelle ledit moyen de serrage à face écrou comprend un boulon à vis (60) ayant une tige s'étendant, en cours d'usage, dans la douille à face écrou (50") et vissée dans l'alésage fileté (155).

6. Dispositif de levage d'essieu selon la revendication 4, dans laquelle le moyen de fixation mâle est une tige supplémentaire (125) qui est attachée à la tige (122) du boulon de pivotement et qui, en cours d'utilisation, traverse la douille (50; 50'; 50"; 50'''), et dans lequel ledit élément de serrage à face écrou comprend un écrou à visser sur la tige supplémentaire.

7. Dispositif de levage d'essieu selon la revendication 1, dans lequel la pièce d'extension comprend une douille à tête (50, 50', 50", 50''') ayant un alésage, laquelle douille à tête est serrée contre la tête (101; 101'; 121; 131; 141; 151) du boulon pivotant au moyen du moyen de serrage à tête (60), et laquelle douille à tête (50; 50'; 50"; 50'''; 90) est préférablement formée avec une collerette radiale (52).

8. Dispositif de levage d'essieu selon la revendication 7, dans lequel l'alésage de la douille à tête possède au moins une partie d'alésage de réception (53; 53'; 53''') qui est complémentaire à la tête (101; 101'; 121; 131; 141; 141'; 151) du boulon de pivotement de manière à recevoir au moins une partie de la tête du boulon de pivotement.

9. Dispositif de levage d'essieu selon l'une quelconque des revendications 7 à 8, dans lequel le moyen de serrage de tête comprend un boulon à vis (60) destiné à être vissé dans un alésage fileté (124 ; 134 ; 144 ; 154) prévu dans la tête (121; 131; 141; 141'; 151) du boulon de pivotement.

10. Dispositif de levage d'essieu selon l'une quelconque des revendications 7 à 8, dans lequel le moyen de serrage à tête (60", 60''') comprend un écrou destiné à être vissé sur une tige filetée prévue sur la tête du boulon de pivotement.

11. Dispositif de levage d'essieu selon l'une quelconque des revendications 1, 2 et 7 à 8, dans lequel le moyen de serrage à tête et le moyen de serrage à face écrou sont intégrés dans un ensemble comprenant une barre traversant un alésage longitudinal (104 ; 114) d'un boulon de pivotement creux (100; 100'; 110), ledit alésage longitudinal s'étendant à travers la tête et la tige, ladite barre ayant des parties d'extrémité filetées aux extrémités opposées et une paire d'écrous coopérant avec lesdites parties d'extrémité filetées.

12. Dispositif de levage d'essieu selon l'une quelconque des revendications 1, 2 et 7 à 8, dans lequel le moyen de serrage à tête et le moyen de serrage à face écrou sont intégrés dans un ensemble comprenant un boulon et un écrou, le boulon ayant une tête et une tige, ladite tige traversant un alésage longitudinal (104; 114) d'un boulon de pivotement creux (100; 100'; 110), ledit alésage longitudinal s'étendant à travers la tête du boulon de pivotement et la tige du boulon de pivotement et ayant une partie d'extrémité filetée, et ledit écrou coopérant avec ladite partie d'extrémité filetée.

13. Suspension d'essieu (1) de roue comprenant une console porteuse (2) montée sur un châssis (3) de véhicule, un bras tiré (4) attaché à un corps d'essieu (5) de l'essieu de roue, un boulon de pivotement (100; 100'; 110; 120; 130; 140; 140'; 150) et un écrou (11, 11') correspondant ainsi qu'un ressort pneumatique (7),
dans laquelle le bras tiré (4) est monté de manière pivotante sur la console porteuse (2) au moyen du boulon de pivotement (100; 100'; 110; 120; 130; 140; 140'; 150) et de l'écrou (11; 11') de serrage correspondant, et le ressort pneumatique (2) fonctionne entre le châssis (3) et le corps d'essieu (5); et
ledit boulon de pivotement (100; 100'; 110; 120; 130; 140; 140'; 150) ayant une tête (101; 101'; 121; 131; 141; 151) et une tige (102; 112; 122; 132; 142; 152), dans laquelle la tête (101; 101'; 121; 131; 141; 151) est munie d'un moyen de fixation femelle (104; 114; 124; 134; 144; 154) ou d'un moyen de fixation mâle d'un côté opposé à la tige (102; 112; 122; 132; 142; 152);
la suspension d'essieu (1) de roue comprenant en outre un dispositif de levage d'essieu (20) comprenant un actionneur (21) adapté pour lever l'essieu de roue, un support (22) monté sur la console porteuse (2) et supportant une extrémité de l'actionneur (21), et un support de positionnement (23) monté sur une extrémité opposée de l'actionneur (21) pour engager le bras tiré (4),
dans lequel l'un du support (22) et du support de positionnement (23), ou à la fois le support (22) et le support de positionnement (23) comprennent deux bras (223, 233), chacun muni d'une ouverture de fixation (224, 234) et agencé au niveau du boulon de pivotement (100; 100'; 110; 120; 130; 140; 140'; 150),
dans lequel le dispositif de levage d'essieu (20) comprend en outre une pièce d'extension (50; 50'; 50"; 50''') montée sur la tête (101; 101'; 121; 131; 141; 151) du boulon de pivotement et traversant l'ouverture de fixation (224, 234) de l'un desdits bras (223, 233),
et un moyen de serrage à tête (60; 60"; 60''') coopérant avec ledit moyen de fixation femelle ou mâle (104; 114; 124; 134; 144; 154) de la tête (101; 101'; 121; 131; 141; 151) du boulon de pivotement et serrant la pièce d'extension (50; 50'; 50"; 50''') sur la tête (101; 101'; 121; 131; 141; 151).

14. Procédé pour construire un essieu de roue d'un véhicule, le procédé comprenant les étapes suivantes:
- fournir un châssis (3) de véhicule avec une console porteuse (2) de chaque côté latéral du châssis (3),
- fournir un boulon de pivotement (100; 100'; 110; 120; 130; 140; 140'; 150) pour chaque console porteuse (2), ledit boulon de pivotement (100; 100'; 110; 120; 130; 140; 140'; 150) ayant une tête (101; 101'; 121; 131; 141; 151) et une tige (102; 112; 122; 132; 142; 152), dans laquelle la tête (101; 101'; 121; 131; 141; 151) est munie d'un moyen de fixation femelle (104; 114; 124; 134; 144; 154) ou d'un moyen de fixation mâle d'un côté opposé à la tige (102; 112; 122; 132; 142; 152),
- attacher un bras tiré (4) à chaque console porteuse (2) au moyen du boulon de pivotement (100; 100'; 110; 120; 130; 140; 140'; 150),
- serrer le boulon de pivotement (100; 100'; 110; 120; 130; 140; 140'; 150) avec un écrou (11, 11') de serrage correspondant à une tension prédéterminée,
- attacher un corps d'essieu (5) aux bras tirés (4),
- monter un ressort pneumatique (7) fonctionnant entre le châssis (3) et le corps d'essieu (5),
et en outre à chacune desdites consoles porteuses (2):
- fournir un dispositif de levage d'essieu (20) comprenant au moins un composant (22 ; 23) de dispositif de levage d'essieu comportant deux bras (223; 233) munis chacun d'une ouverture (224; 234),
- suspendre l'un desdits bras (223; 233) à son ouverture (224; 234) au-dessus d'une extrémité de tige du boulon de pivotement (100; 100'; 110; 120; 130; 140; 140'; 150),
- fournir une pièce d'extension (50; 50'; 50"; 50''') destinée à être montée sur la tête (101; 101'; 121; 131; 141; 151) du boulon de pivotement (100; 100'; 110; 120; 130; 140; 140'; 150),
- introduire la pièce d'extension (50; 50'; 50"; 50''') à travers l'ouverture (224, 234) de l'autre desdits bras (223 ; 233),
- monter la pièce d'extension (50; 50'; 50"; 50''') à la tête (101; 101'; 121; 131; 141; 151) du boulon de pivotement (100; 100'; 110; 120; 130; 140; 140'; 150),
- serrer la pièce d'extension (50; 50'; 50"; 50''') à la tête (101; 101'; 121; 131; 141; 151) au moyen d'un élément de serrage (60; 60"; 60''') adapté pour coopérer avec lesdits moyens de fixation femelles ou mâles (104; 114; 124; 134; 144; 154) de la tête (101; 101'; 121; 131; 141; 151) du boulon de pivotement.

15. Procédé pour monter un dispositif de levage d'essieu (20) sur une unité d'essieu de roue d'un véhicule déjà montée, l'unité d'essieu de roue comprenant un corps d'essieu (5) et une suspension d'essieu (1), la suspension d'essieu comprenant de chaque côté du véhicule une console porteuse (2) montée sur un châssis (3) de véhicule, un bras tiré (4) attaché au corps d'essieu (5), un boulon de pivotement (100; 100'; 110; 120; 130; 140; 140'; 150) et un écrou (11 ; 11') de serrage correspondant ainsi qu'un ressort pneumatique (7), dans lequel le bras tiré (4) est monté de manière pivotante sur la console porteuse (2) au moyen du boulon de pivotement (100; 100'; 110; 120; 130; 140; 140'; 150) et de l'écrou (11, 11') de serrage correspondant, et le ressort pneumatique (7) fonctionne entre le corps d'essieu (5) et le châssis (3), ledit boulon de pivotement (100; 100'; 110; 120; 130; 140; 140'; 150) ayant une tête (101; 101'; 121; 131; 141; 151) et une tige (102; 112; 122; 132; 142; 152), dans lequel la tête (101; 101'; 121; 131; 141; 151) est munie d'un moyen de fixation femelle (104; 114; 124; 134; 144; 154) ou d'un moyen de fixation mâle d'un côté opposé à la tige (102; 112; 122; 132; 142; 152),
le procédé comprenant étapes suivantes:
- fournir un composant (22; 23) de dispositif de levage d'essieu comportant deux bras (223; 233) munis chacun d'une ouverture (224; 234),
- suspendre l'un desdits bras (223; 233) à son ouverture (224; 234) au-dessus d'une extrémité de tige du boulon de pivotement (100; 100'; 110; 120; 130; 140; 140'; 150),
- fournir une pièce d'extension (50; 50'; 50"; 50''') adaptée pour être montée sur la tête (101; 101'; 121; 131; 141; 151) du boulon de pivotement (100; 100'; 110; 120; 130; 140; 140'; 150),
- introduire la pièce d'extension (50; 50'; 50"; 50''') à travers l'ouverture (224, 234) de l'autre desdits bras (223; 233),
- monter la pièce d'extension (50; 50'; 50"; 50''') sur la tête (101; 101'; 121; 131; 141; 151) du boulon de pivotement (100; 100'; 110; 120; 130; 140; 140'; 150),
- serrer la pièce d'extension (50; 50'; 50"; 50''') sur la tête (101; 101'; 121; 131; 141; 151) au moyen d'un élément de serrage (60; 60"; 60''') adapté pour coopérer avec lesdits moyens de fixation femelles ou mâles (104; 114; 124; 134; 144; 154) de la tête (101; 101'; 121; 131; 141; 151) du boulon de pivotement.
